Europäisches Patentamt

European Patent Office

Office européen des brevets

(11) Publication number: **0 400 924**
**A2**

## (12) EUROPEAN PATENT APPLICATION

(21) Application number: 90305739.6

(51) Int. Cl.5: **B01J 19/14**

(22) Date of filing: 25.05.90

(30) Priority: 29.05.89 CA 600923

(43) Date of publication of application:
05.12.90 Bulletin 90/49

(84) Designated Contracting States:
AT BE CH DE ES FR GB IT LI NL SE

(71) Applicant: ALCAN INTERNATIONAL LIMITED
1188 Sherbrooke Street West
Montreal Quebec H3A 3G2(CA)

(72) Inventor: Dube, Ghyslain
1663 Gay Lussac
Jonquiere, Quebec G7S 3K9(CA)

(74) Representative: Wilkinson, Stephen John et al
c/o Stevens, Hewlett & Perkins 5 Quality
Court Chancery Lane
London WC2A 1HZ(GB)

(54) **Process and apparatus for producing a gas which is substantially free of uncombined oxygen from air.**

(57) A process and an apparatus for producing a substantially oxygen-free gas from air are disclosed. The process involves reducing the oxygen content of air in a first step (e.g. in apparatus 10) to 0.5% or more by volume by a non-cryogenic physical separation technique, e.g. by means of the use of a molecular sieve or a diffusion membrane designed to separate oxygen from nitrogen. In a second steps (e.g. in chamber 12) the oxygen remaining in the resulting oxygen-reduced gas is substantially eliminated by contacting the oxygen-reduced gas with an oxidizable material that reacts readily with the oxygen (under suitable conditions) without introducing oxidizing materials or pollutants into the gas. The preferred oxidizable material is a porous bed (21) of carbon particles heated to a temperature of 700-900°C or methane as a gaseous fuel. These materials introduce carbon monoxide and (in the case of methane) water vapour into the substantially oxygen-free gas. Carbon monoxide is an acceptable non-oxidizable gas for many purposes and, if necessary, the water vapour can be removed by condensation. The process can produce an inexpensive gas mixture containing less than about 0.1% by volume of oxygen which is suitable for many industrial purposes, e.g. as the heat transfer medium for a contained arc plasma torch (41) used for heating materials (44) containing aluminum or aluminum alloys.

EP 0 400 924 A2

FIG. IA

The invention relates to a process and apparatus for converting air into a gas or mixture of gases which is substantially free of uncombined oxygen and which, for many purposes, is substantially non-oxidizing. More particularly, although not exclusively, the invention relates to the production of gas mixtures substantially free of uncombined oxygen for use in connection with the plasma heating of materials containing aluminum or aluminum alloys.

There are many industrial and scientific procedures which require the use of non-oxidizing gases. For some procedures, the gases must be extremely inert and the so-called noble gases (argon, helium, etc.) are required. For many other procedures, however, less inert gases such as nitrogen may be employed when the main intention is merely to exclude atmospheric oxygen. Nitrogen is a readily available industrial gas that is inexpensive compared to the noble gases, but it is nevertheless expensive compared to air and can become prohibitively expensive when required in large quantities.

As an example, plasma generators of the contained arc type require a gas to act as a heat transfer medium. While air can be used very effectively for this purpose, the use of air is undesirable in those cases where the plasma is used to heat an oxidizable material such as aluminum or aluminum alloys, particularly when the aluminum or alloys are in the form of thin scrap material having thicknesses in the range of 5-500 micrometers since the resulting oxidation can then be severe. Nitrogen, being a good heat transfer medium and relatively inert to aluminum if the temperature does not exceed about 1000°C, can be used in these circumstances but its cost becomes significant when large output plasma torches are operated in industrial processes.

Another disadvantage of the use of nitrogen and other such gases for large scale industrial operations is that they generally require some sort of transportation system from the place where they are produced to the place where they are used because pure nitrogen, e.g. nitrogen produced by cryogenic means, is not usually produced on site. The gases are normally transported in pressurized or cryogenic containers which are bulky, heavy and/or expensive and must be returned for refilling. Moreover, such containers normally hold relatively small amounts of gas and so fresh containers have to be connected to the user apparatus fairly frequently if the gas is used in large quantities.

To overcome these problems, methods have been developed to produce relatively pure nitrogen by reducing the oxygen content of air in equipment that is sufficiently inexpensive and/or small to enable it to be used on site for many industrial applications. These methods generally rely on the use of molecular sieves or diffusion membranes to separate oxygen from nitrogen at room temperature. However, such methods do not entirely eliminate the oxygen from air and usually at least 0.5% by volume, and more usually about 3% by volume, remains in the resulting gas mixture. This amount of oxygen may be too great for many applications, for example the melting of thin sectioned aluminum-containing products by means of a plasma as mentioned above. Even this amount of oxygen results in significant oxidation of the aluminum metal or alloy (particularly aluminum-magnesium and aluminum-lithium alloys which are very reactive) and so the productivity of the process declines.

Accordingly, it is an object of the present invention to provide means for producing a gas which is substantially free of uncombined oxygen at a reasonably low cost and in reasonably high volume.

Another object of the invention, at least in its preferred forms, is to provide means of the above type which can normally be installed at the point of use of the gas.

According to one aspect of the present invention, there is provided a process for producing from air a gas which is substantially free of uncombined oxygen, said process comprising a first step of reducing the oxygen content of air to produce an oxygen reduced gaseous product containing more than about 0.5% of oxygen by volume and a second step of further reducing the remaining oxygen in the gaseous product by reacting said gaseous product with an oxidizable material.

According to another aspect of the invention, there is provided apparatus for producing a substantially oxygen-free gas from air, which comprises means for reducing the oxygen content of air to 0.5% by volume or more and means for reacting said resulting gas with an oxidizable material to further reduce the oxygen content of the resulting gas.

As will be seen from the following disclosure, by the expression "a gas which is substantially free of uncombined oxygen" we mean any gas which contains less than about 0.5% by volume, and preferably less than about 0.1% by volume, of gaseous molecular oxygen. However, the gases produced by the method of the invention normally contain a trace of molecular oxygen, e.g. at least 0.01% by volume, but such traces are not usually harmful in many of the applications for this type of gas. The actual residual oxygen content depends on the type of oxidizable material employed, the contact time, the contact area, the contact temperature, etc. Residual oxygen contents of 0.01 to 0.1% by volume are especially suitable for the operation of a plasma torch, particularly of the contained arc type, in the presence of molten aluminum and aluminum-containing alloys.

The first step in the process of the invention is the reduction of the oxygen content of air to produce an oxygen-reduced gaseous product. This is carried out to avoid the need for the use of large quantities of the oxidizable material in the second step of the process, which would necessitate the use of large amounts of oxidizable material in the second step. The oxygen content should preferably be reduced to below 10% by volume and, more desirably, to less than about 6% by volume.

The reduction of oxygen in the first step is preferably carried out by a non-cryogenic physical separation method, e.g. one of the conventional methods employing a molecular sieve or a diffusion membrane. The advantage of these methods is that they are relatively inexpensive and can usually be operated on site since the equipment is usually quite small and inexpensive. On site molecular sieve equipment can be obtained, for example, from Air Products and Chemicals Inc., IGD Gas Products - Adsorption systems, of Allentown, Pennsylvania, U.S.A. and is described in a brochure entitled "On-Site PSA Nitrogen for Reliable, Economic Supply" published by the Company. Membrane diffusion equipment can be obtained, for example, from the Linde division of Union Carbide, U.S.A. These systems are capable of supplying an oxygen-reduced gas from air on a continuous or semi-continuous basis on site with a reasonable capital outlay. The oxygen-reduced gas produced by such equipment normally contains 0.5 - 6%, and more usually about 3%, of oxygen by volume and is thus particularly suitable for use in the present invention.

In the second step of the method, the oxygen-reduced gas from the first step is contacted with an oxidizable material.

The oxidizable material should preferably be one which is relatively inexpensive, one which is either a solid having a high surface to volume ratio or a gas in order to promote rapid oxygen removal from the oxygen-reduced gas. The material is also preferably one which does not introduce unacceptable components into the gas, e.g. pollutants, dust or compounds which are themselves oxidants during the desired end use of the substantially oxygen-free gas. If the material is a solid, it should preferably be in the form of a porous mass (e.g. a fluidized or, more preferably, a fixed bed of particles) so that the gas can be passed through the material in order to maximize the gas/solid contact area. The optimum particle size is generally 1 to 3 cm in diameter to provide a large surface area with minimum back pressure generation. If necessary to increase the rate of reaction of the material with the oxygen in the gas, the material and/or the gas may be heated. If so, and if a heated gas is not required for the end use of the substantially oxygen-free gas, the substantially oxygen-free gas may be cooled prior to use. This is also desirable if the oxidizable material generates water vapour as it oxidizes since the cooling of the gas results in the condensation of the water vapour and thus the removal of this potentially undesirable component from the substantially oxygen-free gas. The cooling of the gas can be brought about by passing it over cooled surfaces, e.g. tubes supplied with a coolant, which coolant may be, if desired, the incoming oxygen-reduced gas for counter current heat exchange. The contact between the oxygen-reduced gas and the oxidizable material is preferably carried out while the gas is flowing at a rate suitable to provide a contact time adequate to result in the reaction of substantially all of the oxygen in the oxygen-reduced gas.

In those cases where the oxidizable material is consumed as it reacts with the oxygen, it will be necessary to replace this material during the course of the reaction. If the material is a gas or liquid, it can be fed continuously to the reaction zone. If it is a solid, a suitable excess for a long period of operation can be provided and the solid can be replaced periodically when the majority has been consumed. Advantageously, two or more porous beds of the solid can be used alternatively so that one of the beds can be replenished as the other is being used, thus avoiding disruptions in the production of the substantially oxygen-free gas.

In the preferred embodiments of the invention, gaseous molecular oxygen is converted to a gaseous oxygen-containing compound. Whereas oxygen is undesirable for the intended end use of the gaseous product, the oxygen-containing compound should be one which is acceptable (which usually means substantially non-oxidizing) in the intended end use of the gaseous product. In these embodiments, therefore, the oxygen is not removed from the gas but is inactivated by the reaction with the oxidizable material. However, such gases are referred to herein as "substantially oxygen-free" on the understanding that this term refers to gases which are substantially free of uncombined molecular oxygen.

A preferred material for use in the present invention is particulate carbon in any one of its many forms (e.g. graphite, lamp black, charcoal, coke, etc.). The carbon must be heated to a relatively high temperature (e.g. 700-900°C) if it is to react quickly with oxygen, but since the oxidation of the carbon is exothermic, external heating may only be necessary for the initiation of the reaction. When excess carbon is present, the oxygen in the gas first reacts with the carbon to produce gaseous carbon dioxide and then the carbon dioxide reacts with further carbon to produce carbon monoxide according to the following reactions

$$C + O_2 \rightarrow CO_2 \qquad (1)$$
$$CO_2 + C \rightleftharpoons 2CO \qquad (2)$$

Reaction (1) is very fast and the slower reaction (2) controls the formation ot CO. The presence of the carbon monoxide in the gas is normally acceptable, depending upon the intended end use of the gas mixture, since carbon monoxide is in most circumstances a non-oxidizing gas which is generally inert in the absence of oxidizing agents. The presence of carbon monoxide in the gas is particularly suitable when the gas is used as the heat transfer medium for a plasma torch since it is a diatomic gas like oxygen or nitrogen and diatomic gases are capable of transferring more heat than monatomic gases. Carbon monoxide is also stable in the presence of aluminum and aluminum alloys, even at high temperatures, and so is particularly suited for the treatment of such materials by means of plasma heating. Although carbon monoxide is a poisonous gas and should therefore not be released to the atmosphere without conversion to a harmless product, this gas readily oxidizes to acceptable carbon dioxide in the presence of oxygen at temperatures of about 800-1200° C, and thus can be burnt off in the outlet after the substantially oxygen-free gas has been used.

Gaseous or liquid fuels can also be used as the oxidizable material for use in the present invention provided they can burn in the oxygen-reduced gas without the production of carbon dioxide or (preferably) solid carbon particles. The presence of carbon dioxide should by avoided because it can act as an oxidant in many processes by donating an oxygen atom to form carbon monoxide. The preferred fuel is methane ($CH_4$) which burns to form carbon monoxide and water if present in excess of that required to react with the oxygen present in the oxygen-reduced gas. As noted above, the water vapour should preferably be removed by condensation before the gas is delivered to the point of use.

It has been emphasized above that the present invention is particularly suitable for use in conjunction with the plasma heating of aluminum products. More particularly, the invention is especially suited for (a) the treatment of aluminum dross in a rotary furnace heated with a plasma torch in order to separate the metallic aluminum component therefrom without resorting to the use of fluxing salts (as disclosed in our Canadian Patent 1,255,914, issued on June 20, 1989, the disclosure of which is incorporated herein by reference), and (b) the melting of aluminum scrap by heating the scrap with a plasma torch while tumbling or otherwise displacing the scrap (as disclosed in our co-pending Canadian patent application serial number 600,922 filed on May 29, 1989, the disclosure of which is incorporated herein by reference). The present invention enables these procedures to be carried out on an industrial scale with an inexpensive readily available gas which is substantially free of uncombined oxygen as a heat transfer medium for the plasma torch without causing loss of recoverable aluminum or aluminum alloy due to oxidation or other reaction of the metal with the plasma gases.

The invention can also be used to provide substantially non-oxidizing atmospheres for the heat-treatment of other oxidizable materials, e.g. the melting of finely divided metallic scraps (e.g. of magnesium, aluminum or titanium) using electric heat input (induction heating, resistance heating, plasma, etc.), or for such other processes as powder injection (for alloying, refining. fluxing, modifications, etc.) into liquid metals, etc.

The method of the invention is particularly suited for on-site gas generation because it requires low energy input (compared with cryogenic oxygen removal techniques), the necessary equipment is usually small in volume but capable of producing large gas flows (e.g. 50-250 SCFM), and the equipment has few or no moving parts and has low maintenance requirements.

Preferred embodiments of the invention are described in the following with reference to the accompanying drawings, in which:

Figures 1A and 1B are schematic representations of preferred forms of the process of the present invention;

Figure 2 is a cross-section of a first preferred apparatus for carrying out the second step of the present invention, namely the substantial elimination of oxygen from the oxygen-reduced gas produced in the first step of the invention;

Figure 3 is a cross-section of a second preferred apparatus for carrying out the second step of the present invention; and

Figure 4 is a representation of preferred apparatus of the present invention in conjunction with a contained arc plasma heated furnace for the treatment of products containing aluminum or alloys thereof.

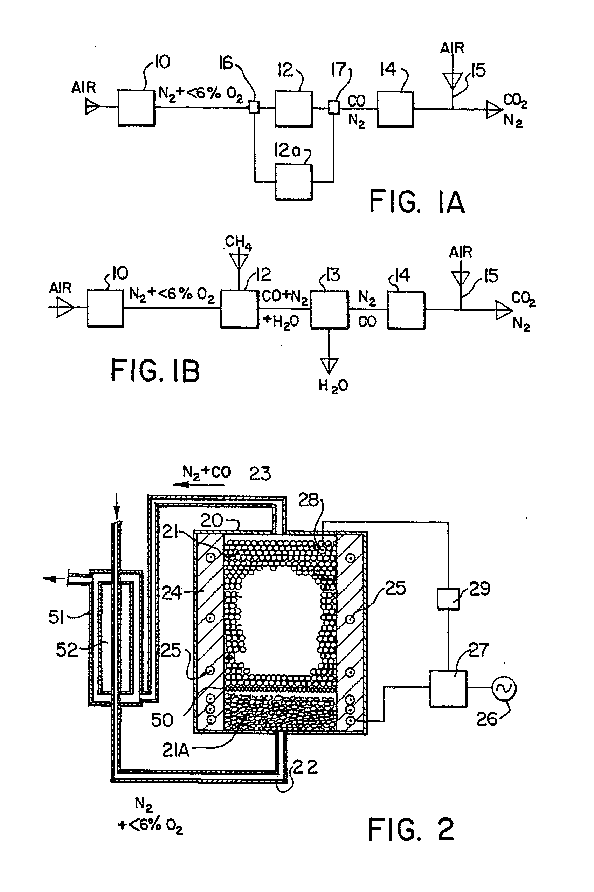

Figure 1A represents a form of the invention which employs carbon as an oxidizable material. Air is first passed into an apparatus 10 for reducing the oxygen content to less than about 6% by volume, such as a molecular sieve or diffusion membrane type of apparatus as mentioned previously. The oxygen-reduced mixture produced by the apparatus 10 is then passed through a chamber 12 containing a porous mass of heated carbon. The remaining oxygen in the gas oxidizes the carbon and forms carbon monoxide gas so that a gaseous mixture containing mainly carbon monoxide and nitrogen, but very little oxygen, is formed.

This mixture of gases is then used in an apparatus 14 for which a supply of substantially oxygen-free gas is required. As the gas leaves the apparatus 14 air or oxygen can be added at 15 and the temperature of the gases raised (if necessary) to cause the carbon monoxide to oxidize to carbon dioxide before the gases are discharged to the atmosphere.

The apparatus includes a second chamber 12a which also contains a porous mass of carbon. The chamber 12a is connected to the gas conveying equipment via two way valves 16 and 17 which can be operated to divert the flow of gas through the second chamber 12a and to isolate the first chamber 12 from the gas flow (or vice versa). This enables a carbon depleted bed in one of the chambers to be replenished while the other chamber is in operation; thus permitting a virtually continuous supply of substantially oxygen-free gas to be maintained.

Figure 1B represents a form of the invention which employs methane as an oxidizable material. The scheme is much the same as in Figure 1A and similar parts are identified by similar reference numerals. However, since methane produces water as well as carbon monoxide when it is oxidized by oxygen, a condenser 13 is provided downstream of methane reactor 12 in order to cool the gas mixture to remove the water component. This is necessary for those uses of the gas mixture for which water would be harmful, e.g. for the heating of materials containing aluminum which can be oxidized by water vapour. Since methane (a gas) can be supplied continuously to chamber 12, there is no need for a second such chamber in this form of the invention.

A preferred apparatus for carrying out the second step of the invention is shown in more detail in Figure 2. This apparatus consists of a column 20, the upper part of which contains a packed bed 21 of carbon particles of sufficient porosity to allow an oxygen-reduced gas flowing into the column from inlet pipe 22 to pass fairly readily through the bed 21 to exit the column through outlet pipe 23. The lower part of the column 20 contains a packed bed 21A of non-reactive particles (e.g. alumina balls) separated from the bed 21 of carbon particles by a screen 50. The column 20 is surrounded by an insulated jacket 24 containing electrical heating elements 25, which are more concentrated in the wall regions adjacent to the bed 21A. The elements 25 are connected to a power supply 26 via a regulator 27. A temperature sensor 28, e.g. a thermocouple, is positioned in the bed 21 near outlet pipe 23 and is connected to an apparatus 29, e.g. a computerized control unit, which actuates the regulator 27. When the apparatus is prepared for use, the elements 25 are supplied with full power in order to heat the beds 21 and 21A to an oxidizing temperature within the range of 700-900°C. The oxygen-reduced gas is then passed through the column 20, passing first through non-reactive bed 21A which pre-heats the gas before it reaches the carbon bed 21. In bed 21, the oxygen component oxidizes the carbon to form carbon monoxide (in preference to carbon dioxide because of the excess of heated carbon). Since this oxidation is exothermic, the heat of reaction heats the bed 21 and the temperature rises. This is sensed by the sensor 28 and the apparatus 29 causes the regulator to reduce the power supplied to the heating elements 25, if necessary to zero. The bed 21 should always be kept at a temperature within the oxidation range. If the temperature falls too low, the heating elements 25 can be used to add heat as required. If the temperature rises too high, then the flow of the oxygen-reduced gas can be reduced or stopped by a suitable valve and control loop (not shown).

The hot gases leaving the exit 23 are used to pre-heat the oxygen-reduced gas entering the column 20 through inlet 22. This takes place in a heat exchange apparatus 51 arranged so that the gases flow countercurrent to each other with the extension of inlet tube 22 having external fins 52 for improved heat transfer.

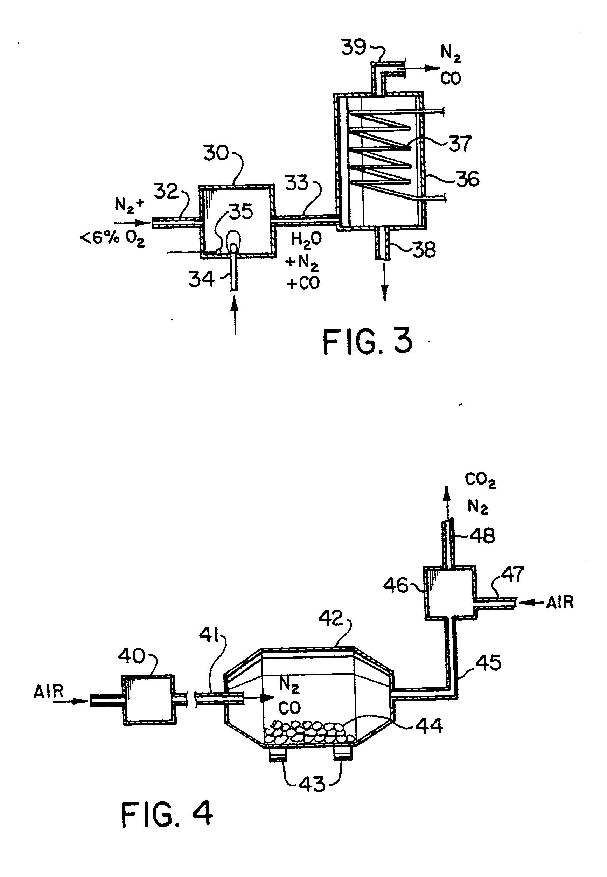

Figure 3 shows an apparatus for substantially eliminating the oxygen content of the oxygen-reduced gas by means of a gaseous carbon-containing fuel, namely methane. The oxygen-reduced gas is introduced into the apparatus 30 through inlet pipe 32 and is mixed with methane introduced through a tube 34. An ignition device 35 is provided to ignite the methane gas so that it burns in the available oxygen to form carbon monoxide and water vapour. The resulting gas mixture is lead through pipe 33 to a condenser unit 36 which contains cooling coils 37 to chill the gas and to cause the water vapour component to condense. The liquid water is removed from the condenser unit 36 through an outlet 38 and the remaining gaseous components, mainly nitrogen and carbon monoxide, exit through outlet 39.

Figure 4 is a schematic representation of the apparatus of the present invention in use for generating a substantially oxygen-free gas for the operation of a plasma heating unit. The apparatus of the present invention is represented by the block 40 which includes both the apparatus for reducing the oxygen content of air to less than about 6% by volume, the apparatus for substantially eliminating any remaining oxygen and, if necessary, the apparatus for removing water vapour. Air is fed into the apparatus 40 and a substantially oxygen-free gas mixture containing mainly nitrogen and carbon monoxide is produced. The gas mixture is used to operate a contained arc plasma torch 41 used to heat a rotary furnace 42 rotatably supported on rollers 43. The furnace contains a charge of material 44 to be heated, normally a material containing aluminum or an aluminum-containing alloy such as dross or thin gauge aluminum scrap. The material can be heated to high temperature without substantial loss of the metallic component because aluminum does not react to any great extent with carbon monoxide. Aluminum may react significantly with nitrogen at temperatures around 1000°C and so this temperature range should be avoided to the extent possible. The gases exit the furnace through outlet pipe 45 to a duct 46 where they are mixed with atmospheric air introduced through pipe 47, heated to a combustion temperature (if necessary), and the carbon monoxide component is burned to $CO_2$ before the gases are discharged to the atmosphere through outlet 48.

After reading the above description, experts skilled in the art will realize that various modifications and variations to the process and apparatus can be made without departing from the broad scope of the present invention. All such modifications and variations are to be considered part of this invention.

**Claims**

1. A process for producing from air a gas which is substantially free of uncombined oxygen, characterized in that said process comprises a first step of reducing the oxygen content of air to produce an oxygen reduced gaseous product containing more than about 0.5% of oxygen by volume and a second step of further reducing the remaining oxygen in the gaseous product by reacting said gaseous product with an oxidizable material.

2. A process according to claim 1 characterized in that said oxidizable material is one which reacts with said remaining oxygen to produce substantially non-oxidizing gaseous materials.

3. A process according to claim 1 characterized in that said oxidizable material is one which reacts with said remaining oxygen to produce carbon monoxide.

4. A process according to claim 1 characterized in that said oxidizable material is one which reacts with said remaining oxygen to produce water vapour, and in that said water vapour is removed by condensing said water vapour.

5. A process according to claim 1 characterized in that said second step is carried out while the oxygen-reduced gas from said first step is flowing at a rate sufficient to provide a contact time between said oxygen-reduced gas and said material effective to cause the reaction of substantially all of said oxygen in said oxygen reduced gas.

6. A process according to claim 1 characterized in that said material is carbon heated to a temperature at which it reacts rapidly with oxygen.

7. A process according to claim 1 characterized in that said material is a carbon-containing fuel.

8. A process according to claim 7 characterized in that said material is methane.

9. A process according to claim 1 characterized in that said second step is carried out by passing said resulting gas through a porous mass of carbon (21) heated to a temperature in the range of about 700-900°C.

10. A process according to claim 9 characterized in that said porous mass (21) is heated, when necessary to maintain said temperature, by a heat source.

11. A process according to any preceding claim, characterized in that said first step is carried out by a non-cryogenic physical separation method.

12. A process according to claim 11 characterized in that said non-cryogenic physical separation method is a method employing a molecular sieve designed to separate oxygen from nitrogen or a method employing a diffusion membrane designed to separate oxygen from nitrogen.

13. Apparatus for producing a substantially oxygen-free gas from air, characterized by comprising means (10) for reducing the oxygen content of air to 0.5% by volume or more and means (12) for reacting said resulting oxygen-reduced gas with an oxidizable material to further reduce the oxygen content of the resulting gas.

14. Apparatus according to claim 13 characterized in that said means (12) for reacting said resulting gas with said oxidizable material comprises a chamber (30) through which said resulting gas may flow, means (34) for introducing a fuel into said chamber, means (35) for igniting said fuel and means (36) downstream of said means (34) for introducing said fuel for removing water vapour from said gas.

15. Apparatus according to claim 13 characterized in that said means for reacting said resulting gas with said oxidizable material comprises a chamber (20) through which said resulting gas may flow, a porous mass of carbon (21) in said chamber, and means (25) for heating said porous mass to a temperature at which carbon undergoes rapid oxidation.

16. Apparatus according to claim 15 characterized by a temperature sensor (28) in said porous mass (21), a control device (29) for receiving signals from said temperature sensor (28), and a regulator (27) for controlling said heating means (25), said control device (29) being capable of causing said regulator (27) to operate to maintain said porous mass (21) at said temperature.

17. A device for further reducing the oxygen content of oxygen-reduced air containing 0.05% or more by volume of oxygen, said device comprising:

a chamber (30) through which said oxygen-reduced gas may flow,

means (34) for introducing a fuel into said chamber,

means (35) for igniting said fuel, and

means (36) downstream of said means (34) for introducing said fuel for removing water vapour from said gas.

18. A device for further reducing the oxygen content of oxygen reduced air containing 0.05% or more by volume of oxygen, said device comprising:

a chamber (20) through which said oxygen-reduced gas may flow,

a porous mass of carbon (21) in said chamber, and

means (25) for heating said porous mass to a temperature at which carbon undergoes rapid oxidation.

19. A method of heating material containing a metal selected from the group consisting of aluminum and aluminum alloys without substantial oxidation of said metal, the method comprising:

tumbling said material in a rotatable furnace (42),

directing a contained arc plasma torch (41) into said furnace (42) to heat said material (44), and

supplying a substantially oxygen-free gas to said plasma torch to act as a heat transfer medium fed through said torch (41) into said furnace (42),

characterized in that said substantially oxygen-free gas is produced by a process comprising a first step of reducing the oxygen content of air to produce an oxygen-reduced gaseous product containing more than about 0.05% of oxygen by volume, and a second step of substantially further reducing the remaining oxygen in the gaseous product by reacting said gaseous product with an oxidizable material.

20. A process for producing from air a gas which is substantially free of uncombined oxygen, said process comprising a first step of reducing the oxygen content of air to about 0.5% by volume or more by a non-cryogenic physical separation technique, and a second step of further reducing the remaining oxygen in the gaseous product from the first step by reacting said gaseous product with an oxidizable material to convert said remaining oxygen to an oxygen-containing gaseous compound that is substantially non-oxidizing under the conditions in which the substantially oxygen-free gas is to be employed.

FIG. IA

FIG. IB

FIG. 2

FIG. 3

FIG. 4